# EUROPEAN PATENT SPECIFICATION

(11) **EP 3 488 300 B1**
(45) Date of publication and mention of the grant of the patent: **14.10.2020**
(21) Application number: 17746388.2
(22) Date of filing: 19.07.2017
(51) Int. Cl.: G05B 15/02

(54) **METHOD FOR OPERATING A BUILDING AUTOMATION SYSTEM, A CONTROL DEVICE AS WELL AS A BUILDING AUTOMATION SYSTEM**
VERFAHREN ZUM BETRIEB EINES GEBÄUDEAUTOMATIONSSYSTEMS, STEUERUNGSVORRICHTUNG SOWIE GEBÄUDEAUTOMATIONSSYSTEM
PROCÉDÉ POUR FAIRE FONCTIONNER UN SYSTÈME D'AUTOMATISATION D'IMMEUBLE, DISPOSITIF DE COMMANDE AINSI QUE SYSTÈME D'AUTOMATISATION D'IMMEUBLE

(30) Priority: 21.07.2016 GB 201612639
(43) Date of publication of application: 29.05.2019
(73) Proprietor: Daimler AG, 70372 Stuttgart (DE)
(72) Inventor: MOSALEM, Khaled, 94022 Los Altos (US); WINKLER, Thomas, 94002 Belmont (US)
(74) Representative: JENSEN & SON
(86) International application number: PCT/EP2017/000872
(87) International publication number: WO 2018/015012

(56) References cited:
- EP-A1- 2 908 206
- WO-A2-2014/153342
- US-A1- 2013 006 425
- US-A1- 2013 303 131
- US-A1- 2014 306 833
- US-A1- 2015 168 002

## Description

The present invention relates to a method for operating a building automation system, wherein by means of a detection device of vehicle passenger data describing at least one passenger of the vehicle are determined and the passenger data are transmitted to a control device, and by means of the control device at least one functional device of a building is controlled depending on the passenger data. Furthermore, the present invention relates to a detection device. Finally, the present invention relates to a building automation system.

Presently, the invention is directed to building automation systems, which can be located in buildings. Such building automation systems can comprise a control device for controlling the heating, the ventilation, the air conditioning, the lighting and other systems in the building. Furthermore, the building automation systems can comprise sensors that detect the temperature, the humidity and/or the light conditions in the building or in the individual rooms of the building. The sensors provide the input data for the control device. A building automation system should reduce building energy and maintenance costs compared to a non-controlled building. It is known from the prior art that the control device can receive data from a vehicle.

Hereto, US 2014/0309790 A1 describes a method wherein a user profile memory associated with a user is referred to as vehicle setting information. Moreover, an identification of at least one area of a building associated with the user is detected. Additionally, it is determined that the at least one area of the building includes a configurable comfort setting and it is determined, based at least partially on the identification of the at least one area of the building and the vehicle setting information, to adjust the configurable comfort setting of the at least one area of the building. Furthermore, an adjustment output to a building comfort control system is provided wherein the building comfort control system is adapted to control the configurable comfort setting of the at least one area of the building.

US 2014/0306833 A1 describes methods and systems of providing home automation information via communication with a vehicle.

US 2013/0006425 A1 shows a method of pattern matching determination of destination and duration of stay in a geographically bounded area.

Moreover, US 2015/0168002 A1 shows a method comprising thermal statically controlling a heating, ventilation and cooling system of a structure over a plurality of days according to a temperature set point schedule.

Moreover, EP 2 908 206 A1 shows a system for regulating the temperature within a defined space.

It is the object of the present invention to demonstrate a solution of how a building automation system that receives data from a vehicle can be controlled more efficiently.

According to the invention, this object is solved by a method, by a detection device as well as by a building automation system having the features according to the respective independent claims. Advantageous developments of the present invention are the subject matter of the dependent claims.

A method according to the invention serves for operating a building automation system. Here, by means of a detection device of vehicle passenger data describing at least one passenger of the vehicle are determined. Furthermore, the passenger data are transmitted to a control device of the building automation system. By means of the control device at least one functional device of a building is controlled depending on the user passenger data. Moreover, by means of the detection device a behaviour of the at least one passenger is determined continuously and the passenger data determined by means of the detection device describe the behaviour of the at least one passenger.

With the aid of the method, a building automation system and in particular a home automation system can be operated. The building automation system can comprise a plurality of functional devices, which can be part of the heating, the air condition, the lighting devices or the like. Furthermore, the building automation system can comprise a plurality of sensors for providing sensor data that describe the temperature, the humidity, the light conditions or the like in the building or the individual rooms of the building. Furthermore, the sensor data can describe the number of occupants in the building. The control device of the building automation system can receive the sensor data and can operate the functional devices depending on the sensor data. Thus, the building automation system can keep the building climate within a specified range, can provide light to rooms based on an occupancy schedule and/or can monitor the performance and device failures in all systems. The building automation system can reduce building energy and maintenance costs.

The control device of the building automation system can further receive data from the detection device of a vehicle. The detection device includes a sensor of the building automation system which is located outside the building in the vehicle. The detection device can for example be located in the interior of the vehicle. The detection device can provide the passenger data that describe the at least one passenger of the vehicle. These passenger data can be communicated to the control device using a wireless data connection. The passenger of the vehicle can also enter the building. In particular the passenger of the vehicle lives or works in the building. The vehicle and the building are separate spaces with different systems controlling environmental parameters, e.g. air temperature, light, mood and the like. When moving from one space to the other, the passenger normally needs to manually adjust those parameters to his current moods and intentions. Here the vehicle and in particular the detection device of the vehicle becomes a smart sensor in the building automation system.

According to an essential aspect of the invention, it is provided that a behaviour of the at least one occupant is determined continuously by means of the detection device. In other words, the detection device learns about the at least one passenger and his intentions and uses this information to determine the passenger data. For example, the behaviour or actions of the passenger can be recorded continuously by means of the detection device. In particular, the detection device uses the learned passenger behaviour to estimate the most likely scenario. The control device inside the building can receive these passenger data and can determine a user profile for the at least one passenger based on the passenger data. In particular, the control device can continuously adapt the user profile of the passenger in dependence of the passenger data. According to this user profile the functional devices are controlled by means of the control device. Therefore, the need for the passenger having to manually adjust parameters of the building automation system by proactively sharing information between the vehicle and the building can be reduced. Overall, the building automation system can thus be controlled more efficiently.

Therein, it is also essential that for determining the behaviour of the at least one passenger an average length of stay during a stay of at the least one passenger in the building is determined. For example, the detection device can use the date of a navigation system of the vehicle to continuously determine the position of the vehicle. Based on this information the detection device can determine the average length of stay during each stay. Thus, the detection device can learn the behaviour of the passenger with respect to their stays. In this way, the detection device can determine whether the passenger plans only a short stopover or the passenger will stay longer in the building based on the information that was communicated from the vehicle to the building automation system. In form of the passenger data, the control device can make better decisions on how to control the functional devices. For example the control device can decide not to heat up all rooms if it is only a temporary stopover.

Preferably, the average length of stay is determined depending on an arrival time and historical behavior of the at least one passenger in the building. As already explained, the detection device can use current and historical navigation data to estimate the intent of the driver. In this way, the detection device may determine the average length of stay. The average length of stay can be determined based on the arrival time of the passenger. For example, the detection device has learned after a routine that the passenger stops at the building for lunch around the noon hour for only an hour. Further, the device can have learned that the driver usually is planning a longer stay when arriving in the evening. The control of the functional devices can be adapted to this stopover and thus the building can be operated efficiently.

According to a further embodiment, the behaviour of the at least one passenger is determined based on configurations in an interior of the vehicle that are conducted by the at least one passenger. The passenger data can describe the vehicle configuration or settings. In particular the passenger data can describe the temperature in the interior of the vehicle. Furthermore, the configurations can describe the light conditions and in particular the colours inside the vehicle. These can be determined by settings on the ambient lighting. Furthermore, the configurations can describe the smell in the interior of the vehicle. Moreover, the passenger data can describe selected emotions and/or the music played. The control device can then control the functional devices in that way that the settings in the vehicle match with the settings in the building at arrival.

According to a further embodiment, the passenger data describe a number of passengers in the vehicle and the at least one functional component is controlled depending on the number of occupants. The vehicle or the detection device will not only be able to communicate the estimated arrival time to the building automation system, but also how many passengers will be arriving. Thus, for example, the heating or the air conditioning can be adjusted to the number of persons.
According to a further embodiment, by means of the detection device for a plurality of passengers a respective user profile is determined and the passenger data describe the respective user profile. The detection device can be adapted to identify the passengers inside the vehicle. For each of the passengers, the control device can update the respective user profile continuously based on its behaviour. Preferably, the control device determines at least one room in the building, which is assigned to the respective passenger, and at least one functional device assigned to the at least one room is controlled depending on the passenger data. For example this allows the building automation system to heat up or cool down the bedrooms of the arriving passengers.

A detection device according to the invention for a building automation system is adapted to determine passenger data that describe the behaviour of at least one passenger in the vehicle. The detection device can be a part of the building automation system which is located outside the building. In particular, the detection device is located in a vehicle, e.g. a motor vehicle.

A building automation system according to the invention comprises a control device according to the invention. The building automation system can further comprise a plurality of functional devices that are located in a building or in respective rooms of the building. Moreover, the building automation system can comprise a plurality of sensors. A control device can also be part of the building automation system. The control device can be adapted to receive sensor data from the sensors of the building and to control the functional devices of the building depending on the sensor data and the user profiles.

The preferred embodiments presented with respect to the method according to the invention and the advantages thereof correspondingly apply to the control device according to the invention as well as to the building automation system to the invention.

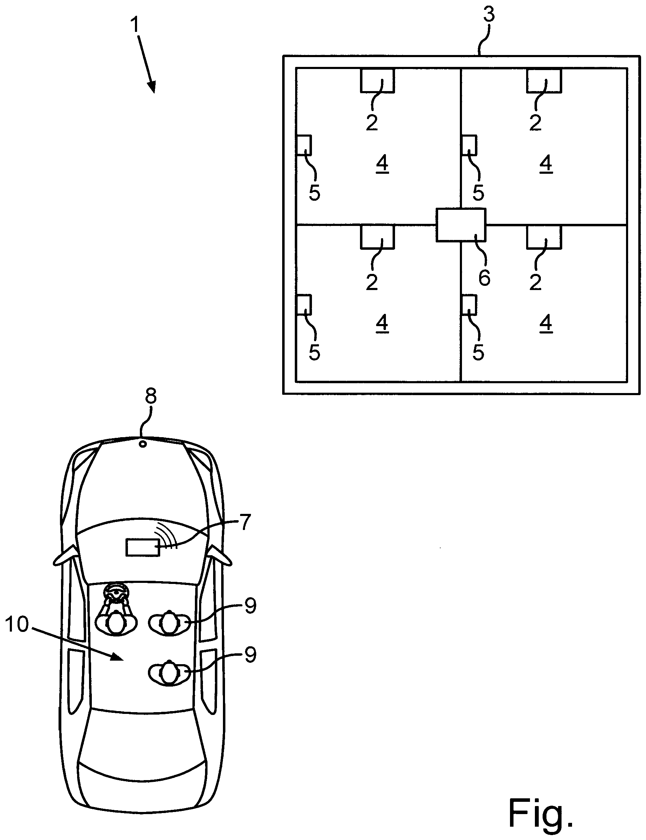

Further advantages, features, and details of the invention derive from the following description of a preferred embodiment as well as from the drawing. The features and feature combinations previously mentioned in the description as well as the features and feature combinations mentioned in the following description of the figure and/or shown in the figure alone can be employed not only in the respectively indicated combination but also in other combinations or taken alone without leaving the scope of the invention.

Now, the invention is explained in more detail based on preferred embodiments as well as with reference to the attached drawing, which shows in schematic representation a building automation system according to an embodiment of the present invention.

The only figure shows a building automation system 1 according to an embodiment of the present invention. The building automation system 1 comprises a plurality of functional devices 2 that are arranged in a building 3. The building 3 can be a home or an apartment. In the present example, the building 3 comprises four rooms 4, which are shown only schematically. Here a functional device 2 is located in each room 4. The functional devices 2 can be part of the heating or the air conditioning of the building 3. The functional devices 2 can also be part of a lighting system or an infotainment system of the building 3.

The building automation system 1 further comprises a plurality of sensors 5. In the present example a sensor 5 is located in each room 4. By means of the sensors 5 sensor data can be determined, which describe the temperature, the humidity, the lighting, the smell or the like can be determined in the respective rooms 4. Furthermore, the building automation system 1 comprises a control device 6, which is arranged inside the building 3. The control device 6 is connected to the sensors 5 for data transmission, for example by means of a data bus (not shown). In this way, the control device 6 can receive the sensor data from the respective sensors 5. The control device 6 is also connected to the respective functional devices 2 for data transmission. The control device 6 can control the respective functional devices 2 in dependence of the sensor data from the sensors 5.

Moreover, the building automation system 1 comprises a detection device 7, which is arranged outside the building 3 in a vehicle 8. By means of the detection device 7 passenger data can be determined that describe the passengers 9 inside the vehicle 8. In the present example three passengers 9 are located in the interior 10 of the vehicle. The detection device 7 can transmit the passenger data wirelessly to the control device 6 in the building 3. The control device 6 can then control the functional devices 2 in dependence on the received passenger data.

The detection device 7 can have different sensors, by means of which the passenger data can be determined. For example, the detection device 7 can comprise a position sensor or a navigation system by means of which the current position of the vehicle can be detected. Thus it can be detected that the vehicle 8 is approaching the building 3 and the passengers 9 are planning a stay in the building 3. The detecting device 7 can further determine a behaviour of the respective passenger 9. For example, the detection device 7 can determined an average stay time of the respective passengers in the building 3. The detection device 7 can be able to record the position of the vehicle 8 continuously and thus learn a behaviour of the passengers 9.

In particular the detection device 7 can determine, if a stop at the building 3 or other places is temporary (stopover) or for a longer duration. The detection device 7 uses learned driver behavior or navigation information to make an estimate about the most likely scenario. Such an estimate can be determined if e.g. the detection device 7 has learned after a routine has been established that the driver stops at home for lunch around the noon hour for only an hour. Based on the information that was communicated from the detection device 7 to the control device 6, the building automation system 1 or the control device 6 can make better decisions on how to control the functional devices 2. For example the control device 6 can recognize that it is not necessary to heat up all rooms 4 if it is only a temporary stopover.

The detection device 7 can also determine the number of passengers 9 in the vehicle 8 and determine the passenger data such that they describe the number of passengers. The control device 6 can then control the functional devices 2 in dependence of the number of passengers. For example, the cooling performance of air conditioning can be enhanced with an increasing number of passengers 9. Preferably, the detecting device 7 can detect the respective passengers 9. For this purpose, the detection device 7 can comprise a camera and a corresponding recognition device. Passengers 9 could also be detected by other means such as e.g. Bluetooth detection of their mobile phones or weight sensors in the vehicle seats. These detection systems could be used in combination with a camera or independently without a camera. In the control device 6 information can be stored, such as assigning the rooms 4 to the respective passengers 9. For example, knowing which passengers 9 or persons are going to arrive allows the control device 6 of the building 3 to proactively heat up or cool down the rooms 4 of the arriving persons.

By means of the detection device 7 settings in the interior 10 of the vehicle 8 can be determined. These settings can be carried out by the passengers 9. The settings can describe the temperature in the interior 10 of the vehicle 8. The settings can also describe a lighting in the interior 10, in particular ambient lighting. In this case the settings can describe a colour of the ambient lighting. Moreover, the configurations can describe the music played in the vehicle 8. Furthermore, it can be provided that the settings describe a smell in the interior 10. This applies in particular for the case that the vehicle 8 has a device for the adjustment of the odour. The control device can use the received passenger data to apply these settings to the building. The control device can operate the functional devices 2 in that way that the configurations in the building 3 match the configurations in the vehicle on the arrival of the passengers 9.

The detection device 7 acts as a smart sensor in the building automation system 1. The detection device 7 in the vehicle 8 is used to learn about the passengers 9 and their intentions and share this information with the building automation system 1. The building automation system 1 can prepare for the arrival of the passengers 9 without the passengers having to do anything manually, e.g. opening an app on their phone. Moreover, the safety can be increased. Some building automation system 1 can be remotely controlled via an application. This is obviously not safe to do while driving. The vehicle can provide a safe user experience to do basic things with minimal distraction.

## Claims

1. Method for operating a building automation system (1), wherein by means of a detection device (7) of a vehicle (8) passenger data describing at least one passenger (9) of the vehicle (8) are determined and the passenger data are transmitted to a control device (6), and by means of the control device (6) at least one functional device (2) of a building (3) is controlled depending on the passenger data,
**characterized in that**
by means of the detection device (7) a behaviour of the at least one passenger (9) is determined continuously and the passenger data determined by means of the detection device (7) describe the behaviour of the at least one passenger (9) whereas for determining the behaviour of the at least one passenger (9) an average length of stay during a stay of at the least one passenger (9) in the building (3) is determined.

2. Method according to claim 1,
**characterized in that**
the average length of stay is determined depending on an arrival time of the at least one passenger (9) in the building (2).

3. Method according to any one of the preceding claims,
**characterized in that**
the behaviour of the at least one passenger (9) is determined based on configurations in an interior (10) of the vehicle (8) that are conducted by the at least one passenger (9).

4. Method according to claim 3,
**characterized in that**
the configurations describe the temperature, the light conditions and/or the smell in the interior (10) of the vehicle (8).

5. Method according to any one of the preceding claims,
**characterized in that**
the passenger data describe a number of passengers (9) in the vehicle (8) and the at least one functional device (2) is controlled depending on the number of passengers (9).

6. Method according to claim 5,
**characterized in that**
the at least one functional device (2) is a heating or an air conditioning.

7. Method according to any one of the preceding claims,
**characterized in that**
by means of the detection device (7) for a plurality of passengers (9) a respective behaviour is determined and the passenger data describe the respective behaviours.

8. Method according to claim 7,
**characterized in that**
the control device (6) determines at least one room (4) in the building (3), which is assigned to the respective passenger (9), and at least one functional device (2) assigned to the at least one room (4) is controlled depending on the passenger data.

## Patentansprüche

1. Verfahren zum Betrieb eines Gebäudeautomatisierungssystems (1), wobei mittels eines Detektors (7) eines Fahrzeugs (8) mindestens einen Insassen (9) des Fahrzeugs (8) beschreibende Insassendaten ermittelt und die Insassendaten an eine Steuereinrichtung (6) übertragen werden, und wobei mittels der Steuereinrichtung (6) mindestens eine Funktionseinrichtung (2) eines Gebäudes (3) in Abhängigkeit der Insassendaten gesteuert wird,
**dadurch gekennzeichnet, dass**
mittels des Detektors (7) ein Verhalten des mindestens einen Insassens (9) kontinuierlich bestimmt wird und die mittels des Detektors (7) bestimmten Insassendaten das Verhalten des mindestens einen Insassens (9) beschreiben, während zur Bestimmung des Verhaltens des mindestens einen Insassens (9) eine durchschnittliche Länge des Aufenthalts während einem Aufenthalt des mindestens einen Insassens (9) im Gebäude (3) bestimmt wird.

2. Verfahren nach Anspruch 1,
**dadurch gekennzeichnet, dass**
die durchschnittliche Länge des Aufenthalts in Abhängigkeit einer Ankunftszeit des mindestens einen Insassens (9) im Gebäude (3) bestimmt wird.

3. Verfahren nach einem der vorhergehenden Ansprüche,
**dadurch gekennzeichnet, dass**
das Verhalten des mindestens einen Insassens (9) auf der Basis von Konfigurationen in einem Innenraum (10) des Fahrzeugs (8) bestimmt wird, die der mindestens eine Insassen (9) ausführt.

4. Verfahren nach Anspruch 3,
**dadurch gekennzeichnet, dass**
die Konfigurationen die Temperatur, die Lichtbedingungen und/oder den Geruch im Innenraum (10) des Fahrzeugs (8) beschreiben.

5. Verfahren nach einem der vorhergehenden Ansprüche,
**dadurch gekennzeichnet, dass**
die Insassendaten eine Anzahl von Insassen (9) im Fahtzeug (8) beschreiben und die mindestens eine Funktionseinrichtung (2) in Abhängigkeit der Anzahl von Insassen (9) gesteuert wird.

6. Verfahren nach Anspruch 5,
**dadurch gekennzeichnet, dass**
die mindestens eine Funktionseinrichtung (2) eine Heizung oder eine Klimaanlage ist.

7. Verfahren nach einem der vorhergehenden Ansprüche,
**dadurch gekennzeichnet, dass**
mittels des Detektors (7) ein jeweiliges Verhalten für eine Vielzahl von Insassen (9) bestimmt wird und die Insassendaten das jeweilige Verhalten beschreiben.

8. Verfahren nach Anspruch 7,
**dadurch gekennzeichnet, dass**
die Steuereinrichtung (6) mindestens ein Zimmer (4) im Gebäude (3) bestimmt, das dem jeweiligen Insassen (9) zugeordnet ist, und dass mindestens eine dem mindestens einem Zimmer (4) zugeordnete Funktionseinrichtung (2) in Abhängigkeit der Insassendaten gesteuert wird.

## Revendications

1. Procédé de fonctionnement d'un système d'automation d'immeuble (1), au moyen d'un dispositif de détection (7) d'un véhicule (8) des données de passager décrivant au moins un passager (9) du véhicule (8) étant déterminées et les données de passagers étant transmises à un dispositif de commande (6), et au moyen du dispositif de commande (6) au moins un dispositif de fonctionnement (2) d'un immeuble (3) étant commandé en fonction des données de passager, **caractérisé en ce qu'**au moyen du dispositif de détection (7) un comportement dudit passager (9) est déterminé en continu et les données de passager déterminées au moyen du dispositif de détection (7) décrivent le comportement dudit passager (9), tandis que pour déterminer le comportement dudit passager (9) une durée moyenne de séjour pendant un séjour dudit passager (9) dans l'immeuble (3) est déterminée.

2. Procédé selon la revendication 1, **caractérisé en ce que** la durée moyenne du séjour est déterminée en fonction de l'heure d'arrivée dudit passager (9) dans l'immeuble (3).

3. Procédé selon l'une quelconque des revendications précédentes, **caractérisé en ce que** le comportement dudit passager (9) est déterminé sur la base de configurations dans un habitacle (10) du véhicule (8) qui sont effectuées par ledit passager (9).

4. Procédé selon la revendication 3, **caractérisé en ce que** les configurations décrivent la température, les conditions de luminosité et/ou l'odeur dans l'habitable (10) du véhicule (8).

5. Procédé selon l'une quelconque des revendications précédentes, **caractérisé en ce que** les données de passager décrivent un certain nombre de passagers (9) dans le véhicule (8) et ledit dispositif fonctionnel (2) étant commandé en fonction du nombre de passagers (9).

6. Procédé selon la revendication 5, **caractérisé en ce que** ledit dispositif fonctionnel (2) étant un chauffage ou un climatiseur.

7. Procédé selon l'une quelconque des revendications précédentes, **caractérisé en ce qu'**au moyen du dispositif de détection (7) pour une pluralité de passagers (9) un comportement respectif est déterminé et les données de passagers décrivent les comportements respectifs.

8. Procédé selon la revendication 7, **caractérisé en ce que** le dispositif de commande (6) détermine au moins une chambre (4) dans l'immeuble (3) qui est attribuée au passager respectif (9), et au moins un dispositif fonctionnel (2) attribué à ladite chambre (4) étant commandé en fonction des données de passager.
